# EUROPEAN PATENT SPECIFICATION

(11) **EP 3 895 904 B1**
(45) Date of publication and mention of the grant of the patent: **17.06.2026**
(21) Application number: 19895944.7
(22) Date of filing: 12.12.2019
(51) Int. Cl.: B60C 1/00, C08G 81/02, C08L 9/00, C08L 19/00, C08L 65/00, C08G 18/08, C08G 18/24, C08G 18/32, C08G 18/69, C08G 18/75, C08G 18/76, C08L 75/04, C08G 101/00

(54) **RUBBER COMPOSITION AND TIRE IN WHICH SAME IS USED**
KAUTSCHUKZUSAMMENSETZUNG UND REIFEN, IN DEM DIESE VERWENDET WIRD
COMPOSITION DE CAOUTCHOUC ET PNEU DANS LEQUEL CELLE-CI EST UTILISÉE

(30) Priority: 13.12.2018 JP 2018233687
(43) Date of publication of application: 20.10.2021
(73) Proprietor: BRIDGESTONE CORPORATION, Chuo-ku Tokyo 104-8340 (JP)
(72) Inventor: SHODA, Yasuhiro, Tokyo 104-8340 (JP); OTSUKA, Hideyuki, Tokyo 152-8550 (JP); AOKI, Daisuke, Tokyo 152-8550 (JP)
(74) Representative: Marks & Clerk LLP
(86) International application number: PCT/JP2019/048682
(87) International publication number: WO 2020/122174

(56) References cited:
- WO-A1-2017/201852
- JP-A- 2004 256 745
- JP-A- 2008 231 272
- JP-A- 2010 275 487
- JP-A- 2013 224 361
- JP-A- 2013 531 076
- JP-A- H02 180 917
- JP-A- H05 125 348
- JP-A- H07 149 825
- JP-A- S5 780 421
- US-A1- 2013 345 336
- US-B2- 7 999 036
- OHISHI, T ET AL.: "Metathesis-driven scrambling reactions between polybutadiene or naturally occurring polyisoprene and olefin-containing polyurethane", POLYMER, vol. 78, 2015, pages 145 - 153, XP029290615, DOI: 10.1016/j.polymer.2015.09.076

## Description

### Technical Field

The present invention relates to a rubber composition having excellent fracture resistance, in particular, crack growth resistance.

### Background Art

In order to improve various physical properties required for a tire, a technique for improving a rubber component has conventionally been studied. For example, PTL 1 proposes a technique of highly balancing the heat resistance, fracture strength, loss tangent (tan δ), and the like in the resulting rubber composition by modifying a terminal of a diene PTL 1 relates to a rubber composition and a tire prepared using the rubber composition, comprising a thermoplastic PU. PTL 2 relates to a high performance tire-soluble styrene-butadiene rubber-PU elastomer material and a preparation method. PTL 3 relates to a diene-based PU composition for tires. PTL 4 relates to rubber compositions intended in particular for the manufacture of tires or tire semi-finished products. NPL 5 relates to relates to metathesis-driven scrambling reactions between polybutadiene or naturally occuring polyisoprene and olefin-containing PU. PTL 6 a block copolymer comprising a polyisoprene block and a polybutadiene block, and a rubber composition containing the block copolymer, applicable for manufacturing tires. PTL 7 relates to relates to a rubber composition useful for tires having improved frictional force on ice.

However, when the technique disclosed in PTL 1 is applied to a tire, further improvement has been desired in the crack growth resistance of the tire although an excellent effect is achieved in the low hysteresis loss.

### Citation List

### Patent Literature

PTL 1: JP 2009-191100 A
PTL 2: US 7 999 036 B2
PTL 3: WO 2017/201852 A1
PTL 4: JP S57 80421 A
NPL 5: Ohishi et al. Polymer, 2015, vol. 78, pages 145-153
PTL 6: JP 2008 231272 A
PTL 7: JP 2004 256745 A

### Summary of Invention

### Technical Problem

However, when the technique disclosed in PTL 1 is applied to a tire, further improvement has been desired in the crack growth resistance of the tire although an excellent effect is achieved in the low hysteresis loss.

An objective of the present invention is to provide a rubber composition having excellent fracture resistance, in particular, crack growth resistance, and a tire formed by using the rubber composition.

### Solution to Problem

The present inventors have made intensive studies, and as a result, with a focus on a hydrogen bond which is one of noncovalent bonds, they have intended to embody high toughness by incorporating a hydrogen bond into a diene rubber material, and they have thus found that when a polyurethane is incorporated in a polybutadiene backbone through a polymer reaction using a Grubbs 2nd generation catalyst, the high toughness is exhibited even in a rubber composition in which a compounding chemical is blended. Thus, they have found that the above problem can be solved by mixing a novel hydrogen bond-incorporated diene polymer, that is, a polymer having a urethane backbone and a diene backbone in one molecule into a rubber composition.

Specifically, the present invention is defined in the appended claims.

### Advantageous Effects of Invention

The present invention can provide a rubber composition having excellent fracture resistance, in particular, crack growth resistance, and a tire formed by using the rubber composition.

### Description of Embodiments

### [Rubber composition]

The rubber composition of the present invention contains a rubber component that contains a diene rubber, the diene rubber containing a polymer (A) that has a urethane backbone and a diene backbone in one molecule.

In the present invention, a hydrogen bond of a polyurethane is fused into a diene elastomer at the level of molecule to thus increase the crack growth resistance of a rubber composition. The hydrogen bond is weaker than the C-S and S-S bond, and thus is broken when subjected to a strain to cause energy dissipation. By designing the molecule to be not broken at a low strain which contributes to the fuel economy performance but be broken at a high strain, the hysteresis loss-crack growth resistance balance and the fracture resistance can be considerably increased.

In the rubber composition of the present invention, the polymer (A) is preferably contained in an amount of 2 to 100% by mass of the rubber component from the viewpoint of the increases in the crack growth resistance balance and fracture resistance due to the urethane backbone, more preferably 5 to 100% by mass, further preferably 10 to 100% by mass, and particularly preferably 10 to 30% by mass.

### [Polymer (A)]

The polymer (A) according to the present invention has a urethane backbone and a diene backbone in one molecule, and the molar ratio of the urethane backbone to the diene backbone (urethane backbone/diene backbone) is preferably (0.5/99.5) to (50/50) from the viewpoint of the balance between the increased crack growth resistance balance and fracture resistance due to the urethane backbone and the fuel economy performance due to the deteriorated compatibility, more preferably (0.5/99.5) to (40/60), further preferably (1/99) to (30/70), and particularly preferably (2/98) to (20/80).

### (Urethane backbone in polymer (A))

The urethane backbone in the polymer (A) has a structure represented by the following formula 1.

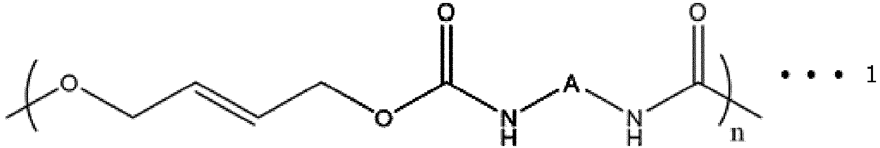

In the formula 1, A represents a hydrocarbon group which may have an element other than carbon and hydrogen, and n represents 1 to 250.

As A in the formula 1, the following formulae 4 to 7 are used for the present invention.

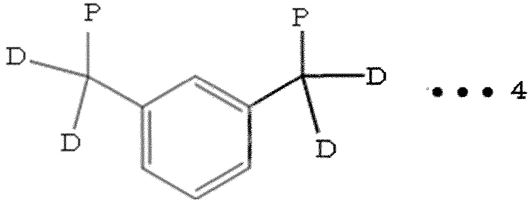

In the formula 4, P is a bonding point that binds to a nitrogen atom adjacent to A via a single bond, D is a hydrogen atom or a hydrocarbon group having 1 to 20 carbon atoms, and plural D's may be the same as or different from one another.

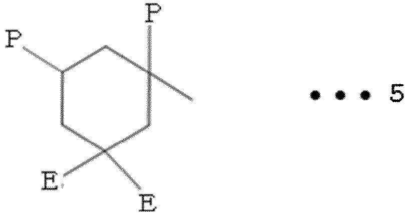

In the formula 5, P is a bonding point that binds to a nitrogen atom adjacent to A via a single bond, E is a hydrogen atom or a hydrocarbon group having 1 to 20 carbon atoms, and plural E's may be the same as or different from each other.

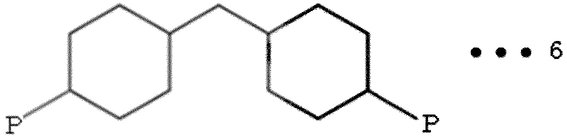

In the formula 6, P is a bonding point that binds to a nitrogen atom adjacent to A via a single bond.

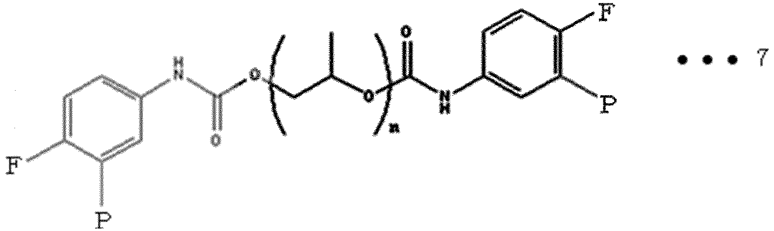

In the formula 7, n is 1 to 32, more preferably 1 to 30, further preferably 1 to 20, and particularly preferably 1 to 5. P is a bonding point that binds to a nitrogen atom adjacent to A via a single bond, F is a hydrogen atom or a hydrocarbon group having 1 to 20 carbon atoms, and plural F's may be the same as or different from each other.

As A, the formulae 4 to 6 have a larger amount of urethane bonds than the formula 7, and thus are superior to the formula 7 from the viewpoint of the increases in the crack growth resistance balance and fracture resistance due to the urethane backbone.

### (Diene backbone in polymer (A))

The diene backbone in the polymer (A) preferably contains a conjugated diene.

The conjugated diene preferably has 4 to 8 carbon atoms. Specific examples of the conjugated diene compound include 1,3-butadiene, isoprene, 1,3-pentadiene, and 2,3-dimethyl-1,3-butadiene. One of the conjugated diene compounds may be used alone or two or more thereof may be used in combination.

The diene backbone in the polymer (A) preferably has a structure represented by the following formula 8.

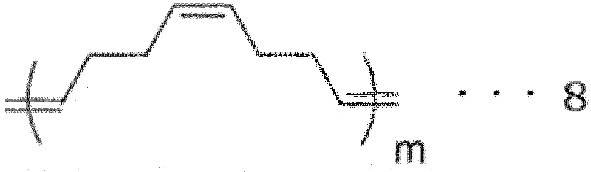

The polymer (A) having the formula 1 and the formula 2 preferably has a structure represented by the following formula 9.

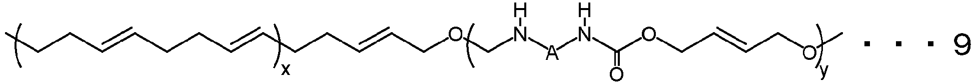

In the formula 9, A represents a hydrocarbon group which may have an element other than carbon and hydrogen.
x represents 1 to 13500, and y represents 1 to 250. x is preferably 1 to 10000, more preferably 1 to 5000, further preferably 1 to 4500, furthermore preferably 1 to 4000, and particularly preferably 1 to 600. y is preferably 1 to 200, more preferably 1 to 150, further preferably 1 to 140, and particularly preferably 1 to 100.

A non-urethane backbone containing a diene backbone is preferably present between the urethane backbones in the polymer (A).

The non-urethane backbone preferably has a number average molecular weight Mn of 2400 to 1350000, a weight average molecular weight Mw of 2400 to 2300000, and a molecular weight distribution MWD of 1.0 to 2.4.

The number average molecular weight Mn of the non-urethane backbone is more preferably 2400 to 500000, further preferably 2400 to 450000, and particularly preferably 2400 to 400000. The weight average molecular weight Mw is more preferably 2400 to 1000000, Mw is further preferably 2400 to 900000, and Mw is particularly preferably 2400 to 800000. The molecular weight distribution MWD is more preferably 1.0 to 2.3, further preferably 1.0 to 2.2, and particularly preferably 1.0 to 2.0.

When the molecular weight of the non-urethane backbone is too large, the urethane is present in a block form and thus the hysteresis loss in a low strain region is increased and deteriorated.

Regarding the microstructure of the conjugated diene moiety in the polymer (A), for example, in the case of cis-1,4-polybutadiene, the cis-1,4-bond content in the cis-1,4-polybutadiene is preferably 90% by mass or more, more preferably 92% by mass or more, further preferably 94% by mass or more, and particularly preferably 95% by mass or more.

On the other hand, in the case where a polybutadiene having an especially high 1,2-vinyl-bond content is used, the 1,2-vinyl-bond content is preferably 25% by mass or more, more preferably 40% by mass or more, further preferably 50% by mass or more, and particularly preferably 60% by mass or more.

In the present invention, the number average molecular weight Mn, weight average molecular weight Mw, and molecular weight distribution MWD of each polymer (including the urethane backbone, non-urethane backbone, and the like) in terms of polystyrene are determined by gel permeation chromatography [GPC: HLC-8020 manufactured by Tosoh Corporation, column: GMH-XL manufactured by Tosoh Corporation (two columns are connected in series), detector: refractive index detector (RI)] based on monodisperse polystyrenes, and are taken as the number average molecular weight Mn, weight average molecular weight Mw, and molecular weight distribution MWD in the present invention.

### (Method for producing polymer (A))

The polymer (A) according to the present invention may be produced, for example, as described below, by synthesizing a cis-olefin-containing polyurethane (cis-PU) in a first step, synthesizing a cis-1,4-polybutadiene (PBD) in a second step, and then subjecting the cis-PU and PBD to a polymer scrambling reaction in a third step to obtain a PBD/PU copolymer (polybutadiene/cis-olefin-containing polyurethane copolymer).

### First step [synthesis of cis-olefin-containing polyurethane (cis-PU)]

For example, an appropriate amount of dry DMF (N,N-dimethylformamide) is added to the respective appropriate amounts of trimethyl-1,6-diisocyanatohexane and cis-butene-1,4-diol and the components are mixed in a round bottom flask. An appropriate amount of DBTDL (dibutyltin dilaurate) is added thereto with stirring at a room temperature (23°C), and the reaction mixture is stirred at 40°C for 48 hours. Then, methanol is added to stop the reaction, and the mixture is poured into water with vigorous stirring. The precipitated polymer is collected and is dried in vacuum to obtain a cis-PU (cis-olefin-containing polyurethane).

### Second step [synthesis of cis-1,4-polybutadiene (PBD)]

In a Schlenk flask filled with nitrogen, a Grubbs 2nd generation catalyst as described later is added to a solution of 1,5-cyclooctadiene in dry CH₂Cl₂, and the mixture is deaerated through three cycles of freezing-vacuum -thawing. Subsequently, the mixture is stirred at ambient temperature for 2 hours, and then an excess amount of ethyl vinyl ether is added thereto with a syringe for quenching and the mixture is stirred for 12 hours. The solution is poured into methanol with vigorous stirring, and then the precipitated polymer is collected and is dried in vacuum to obtain a cis-1,4-polybutadiene.

A commercially available cis-1,4-polybutadiene may be used without the synthesis of the second step.

### Third step [polymer scrambling reaction by olefin cross-metathesis reaction]

In a Schlenk flask filled with nitrogen, a Grubbs 2nd generation catalyst as described later (1 mol% of the total number of the double bond units in the polymer main chain) is added to, for example, a solution of equal amounts of the cis-1,4-polybutadiene (PBD) and the cis-olefin-containing polyurethane (cis-PU) in dry CH₂Cl₂ (a polymer concentration: 70 mol%), and the mixture is deaerated through three cycles of freezing-thawing. Subsequently, the mixture is stirred at ambient temperature for 24 hours, then an excess amount of ethyl vinyl ether is added thereto for quenching, and the mixture is stirred at a room temperature (23°C). After stirring the mixture for 6 hours, a solution of THP (tetrahydropyran) and triethylamine in a solvent mixture of methanol and CH₂Cl₂ [(methanol/CH₂Cl₂) volume ratio (v/v) = 1/1] is added thereto and the residue is removed. After removing the solvent under reduced pressure, the residue is dissolved again in a small amount of CH₂Cl₂, and the mixture is poured into a water/methanol mixed liquid [(water/methanol) volume ratio (v/v) = 3/1] with vigorous stirring. The precipitated polymer is collected and is dried in vacuum to obtain a PBD/cis-PU copolymer.

### (Grubbs 2nd generation catalyst)

The Grubbs 2nd generation catalyst (2nd generation Grubbs catalyst) used in the present invention is benzylidene{1,3-bis(2,4,6-trimethylphenyl)-2-imidazolidinylidene}dichloro(tricyclohexylphosphine)ruthenium (C₄₆H₆₅Cl₂N₂Pru, molecular weight: 848.97, CAS registry number: [246047-72-3]), and was purchased from Sigma-Aldrich Inc. The chemical structure formula is shown below as the formula 10 for reference.

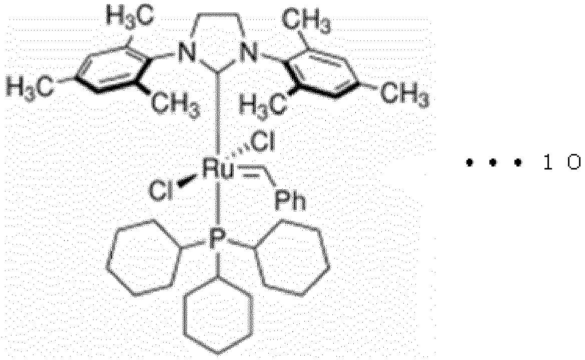

### [Rubber component]

Examples of diene rubber components, other than the polymer (A), mixed in the rubber composition of the present invention include a natural rubber, an epoxidated natural rubber, a butadiene rubber of any kind, a styrene-butadiene copolymer rubber of any kind, an isoprene rubber, a butyl rubber, an acrylonitrile butadiene rubber, a chloroprene rubber, an ethylene-propylene-diene copolymer rubber, and a styrene-isoprene copolymer rubber. One of the diene rubber components may be used alone or two or more thereof may be used in combination.

As a diene rubber component other than the polymer (A), a polybutadiene rubber is preferably contained.

In production of the polybutadiene rubber, either of a solution polymerization method or an emulsion polymerization method may be used. In a solution polymerization method, a gadolinium metallocene complex catalyst, a nickel-based catalyst, a cobalt-based catalyst, a titanium-based catalyst, or an alkyllithium catalyst is used, and the microstructure is varied depending on the type of the catalyst. An example of a polybutadiene rubber produced by using a nickel-based catalyst is BR01 (cis-1,4-bond content: 95 wt%) manufactured by JSR Corporation, and examples of polybutadiene rubbers produced by using a cobalt-based catalyst include UBEPOL BR 150 (cis-1,4-bond content: 98 wt%), 150B (cis-1,4-bond content: 97 wt%), 150L (cis-1,4-bond content: 98 wt%) manufactured by UBE INDUSTRIES LTD.

Examples of polybutadiene rubbers having a relatively high 1,2-vinyl bond content include Ricon 130 (1,2-vinyl-bond content: 28 wt%) and Ricon 142 (1,2-vinyl-bond content: 55 wt%) manufactured by Cray Valley, and examples of polybutadiene rubbers having an especially high 1,2-vinyl-bond content include Ricon 150 (1,2-vinyl-bond content: 70 wt%) and Ricon 152 (1,2-vinyl-bond content: 80 wt%).

### [Filler]

The rubber composition of the present invention may contain a filler, in particular, a reinforcing filler, as required.

Suitable examples of the reinforcing filler according to the present invention include one or more reinforcing fillers selected from the group consisting of a carbon black and a silica. Besides the above, examples of the filler also include a clay, calcium carbonate, and aluminum hydroxide.

### (Carbon black)

The carbon black that is suitably mixed in the rubber composition of the present invention preferably has a nitrogen adsorption specific surface area (N₂SA) of 20 m²/g or more and 200 m²/g or less, more preferably 30 m²/g or more and 160 m²/g or less, further preferably 35 m²/g or more and 100 m²/g or less, and particularly preferably 40 m²/g or more and 100 m²/g or less.

Here, the nitrogen adsorption specific surface area (N₂SA) of a carbon black can be measured according to JIS K 6217-2:2001.

The carbon black mixed in the rubber composition of the present invention preferably has a DBP (dibutyl phthalate) oil absorption of 50 ml/100 g or more and 135 ml/100 g or less, more preferably 55 ml/100 g or more and 130 ml/100 g or less, further preferably 60 ml/100 g or more and 130 ml/100 g or less, and particularly preferably 65 ml/100 g or more and 125 ml/100 g or less.

Here, the DBP oil absorption can be measured according to JIS K 6217-4:2008.

The content of the carbon black based on 100 parts by mass of the rubber component is preferably 20 to 150 parts by mass. With a carbon black content of 20 parts by mass or more, the crack growth resistance of the rubber composition can be increased more, and with a carbon black content of 150 parts by mass or less, the workability of the rubber composition is less likely to be impaired. The carbon black content based on 100 parts by mass of the rubber component is more preferably 20 to 100 parts by mass, further preferably 30 to 80 parts by mass, and particularly preferably 30 to 60 parts by mass.

### (Silica)

The type of the silica suitably mixed in the rubber composition of the present invention is not particularly limited, and any silica, from a general grade silica to a surface-treated specific silica, can be used according to the use purpose, and examples thereof include a wet method silica (hydrated silicic acid), a dry method silica (anhydrous silicic acid), calcium silicate, and aluminum silicate. One of the silicas may be used alone or two or more thereof may be used in combination.

Among them, as a silica (B), a wet method silica is preferably used in that the workability of the rubber composition and the crack growth resistance of a tire are increased.

### (Other compounding ingredient)

As other compounding ingredients mixed in the rubber composition of the present invention, any compounding ingredient may be appropriately selected and used to the extent that the objective of the present invention is not impaired, and examples thereof include an inorganic filler other than the fillers mentioned above, a vulcanizer, such as sulfur, a vulcanization accelerator, such as dibenzothiazyl disulfide, N-cyclohyxyl-2-benzothiazyl-sulfenamide, or N-oxydiethylene-benzothiazyl-surufenamide, a vulcanization accelerator aid, such as zinc oxide or stearic acid, a heat resistant crosslinker, an antioxidant, such as N-phenyl-N'-(1,3-dimethylbutyl)-p-phenylenediamine, a sunlight crack resistant, a colorant, a rubber flexibility improver, a softening agent, a resin, a coupling agent, and other additives, and a compounding ingredient of any kind generally used in the rubber industry. As the compounding ingredients, commercially available products can be suitably used.

As the sunlight crack resistant, a wax, such as microcrystalline wax, is mixed, and examples thereof include trade name "SUNNOCK" and "OZONOCK" manufactured by OUCHI SHINKO CHEMICAL INDUSTRIAL CO.,LTD.; trade name "SUNTIGHT" manufactured by Seiko Chemical Co., Ltd.; and trade name "OZOGARD G" manufactured by Kawaguchi Chemical Industry Co., Ltd., and "Vanwax-H Special"
An example of the heat resistant crosslinker is N,N'-diphenylmethane bismaleimide (hereinafter abbreviated as "BMI"), which can provide a crosslinking structure that is thermally stabler than by a crosslinking with sulfur.

As the rubber flexibility improver, a dicyclopentadiene (DCP) resin is suitably used, and examples thereof include "Quintone 1105" manufactured by ZEON CORPORATION and trade name "Marcarets M" series (M-890A, M-845A, M-990A, etc.) manufactured by MARUZEN PETROCHEMICAL CO., LTD.

### [Preparation of rubber composition and production of pneumatic tire]

The rubber composition according to the present invention is obtained by performing a master batch kneading step using a kneader, such as a bunbury mixer, a roll, or an internal mixer, according to various formulations, in which a vulcanizer, a vulcanization accelerator, a heat resistant crosslinker, and a vulcanization accelerator aid are not mixed, and then performing a final kneading step in which a vulcanizer, a vulcanization accelerator, a heat resistant crosslinker, and a vulcanization accelerator aid are mixed. The rubber composition is subjected to molding and vulcanization before used as various members of a pneumatic tire.

### [Applications other than for tire]

The rubber composition of the present invention is suitably used in applications other than for a tire, for example, for various members, such as a vibration proof rubber, a vibration isolation rubber, a crawler, a belt, and a hose. Examples

The present invention will be described in more detail below with reference to examples.

### Production Example 1 [synthesis of PBD/cis-PU copolymer I (PB-PU I)]

### First step [synthesis of cis-olefin-containing polyurethane (cis-PU)]

A compound of the formula 3 having A represented by the formula 4 (27.8 mL, 114.0 mmol), cis-butene-1,4-diol (9.2 mL, 111.9 mmol), and dry DMF (N,N-dimethylformamide) (150 mL) were mixed in a round bottom flask, DBTDL (dibutyltin dilaurate) (0.17 mL, 0.283 mmol) was added thereto with stirring at a room temperature (23°C), and then the reaction mixture was stirred at a room temperature (23°C) for 48 hours. Subsequently, methanol was added to stop the reaction, and the mixture was poured into water with vigorous stirring. The precipitated polymer was collected and was dried in vacuum to obtain 36 g (95%) of a cis-PU.

### Second step

The second step was not performed and 150 L of a cis-1,4-polybutadiene manufactured by UBE INDUSTRIES, LTD. was used.

### Third step [polymer scrambling reaction by olefin cross-metathesis reaction]

In a Schlenk flask filled with nitrogen, a Grubbs 2nd generation catalyst as described above ((92.9 mg, 110 µmol, 1 mmol% of the total number of double bond units in the polymer main chain) was added to a solution of 150 L of the cis-1,4-polybutadiene (PBD: 86 mol%) manufactured by UBE INDUSTRIES, LTD. and the cis-olefin-containing polyurethane (cis-PU: 14 mol%) in dehydrated THF (tetrahydrofuran, polymer concentration: 70 wl%). Subsequently, the mixture was stirred at a room temperature (23°C) for 24 hours, then an excess amount of ethyl vinyl ether was added thereto and the mixture was stirred at a room temperature (23°C) for quenching (rapidly cooling). A mixed solution of methanol and CH₂Cl₂ [(methanol/CH₂Cl₂) volume ratio (v/v) = 1/1], THP (tetrahydropyran: 0.68 g, 5.48 mmol), and triethylamine (1.52 ml, 10.9 mmol) was added thereto and the solvent was partially removed under reduce pressure, and then, the mixture was poured into a water/methanol mixed liquid [(water/methanol) volume ratio (v/v) = 3/1] with vigorous stirring. The precipitated polymer was collected and was dried in vacuum to obtain a PBD/cis-PU copolymer I [molar ratio (urethane backbone/diene backbone): 14/86].

Mn was 12,000 and Mw/Mn was 1.4.

### Production Example 2 [synthesis of PBD/cis-PU copolymer II (PB-PU II)]

### First step [synthesis of cis-olefin-containing polyurethane (cis-PU)]

A compound of the formula 3 having A represented by the formula 4 (25.2 mL, 114.0 mmol), cis-butene-1,4-diol (6.74 mL, 82.0 mmol), and dry DMF (N,N-dimethylformamide) (150 mL) were mixed in a round bottom flask, DBTDL (dibutyltin dilaurate) (0.17 mL, 0.283 mmol) was added thereto with stirring at a room temperature (23°C), and then the reaction mixture was stirred at a room temperature (23°C) for 48 hours. Subsequently, methanol was added to stop the reaction and the mixture was poured into water with vigorous stirring. The precipitated polymer was collected and was dried in vacuum to obtain 36 g (95%) of a cis-PU.

The second step was not performed and a cis-1,4-polybutadiene 150 L manufactured by UBE INDUSTRIES, LTD. was used..

The third step was performed with a ratio of the cis-1,4-polybutadiene (PBD: 94 mol%) and the cis-olefin-containing polyurethane (cis-PU: 6 mol%) to obtain a PBD/cis-PU copolymer II [molar ratio (urethane backbone/diene backbone): 6/94].

Mn was 9,000 and Mw/Mn was 1.3.

### Production Example 3 [synthesis of PBD/cis-PU copolymer III (PB-PU III)]

### First step [synthesis of cis-olefin-containing polyurethane (cis-PU)]

A compound of the formula 3 having A represented by the formula 4 (27.8 mL, 114.0 mmol), cis-butene-1,4-diol (6.74 mL, 82.0 mmol), and dry DMF (N,N-dimethylformamide (150 mL) were mixed in a round bottom flask, DBTDL (dibutyltin dilaurate) (0.17 mL, 0.283 mmol) was added thereto with stirring at a room temperature (23°C), and then the reaction mixture was stirred at 40°C for 48 hours. Subsequently, methanol was added to stop the reaction, and the mixture was poured into water with vigorous stirring. The precipitated polymer was collected and was dried in vacuum to obtain 36 g (95%) of a cis-PU. Here, Ain the urethane backbone of the formula 1 is represented by the formula 4.

The second step was not performed and 150 L of a cis-1,4-polybutadiene manufactured by UBE INDUSTRIES, LTD. was used.

The third step was performed at a ratio of the cis-1,4-polybutadiene (PBD: 98mol%) and the cis-olefin-containing polyurethane (cis-PU: 2 mol%) to obtain a PBD/cis-PU copolymer III [molar ratio (urethane backbone/diene backbone): 2/98].

Mn was 4,000 and Mw/Mn was 1.5.

### Production Example 4 [synthesis of PBD/cis-PU copolymer IV (PB-PU IV)]

### First step [synthesis of cis-olefin-containing polyurethane (cis-PU)]

A compound of the formula 3 having A represented by the formula 5 (18.9 mL, 85.5 mmol), cis-butene-1,4-diol (6.9 mL, 85.5 mmol), and dry DMF (N,N-dimethylformamide) (150 mL) were mixed in a round bottom flask, DBTDL (dibutyltin dilaurate) (0.17 mL, 0.283 mmol) was added thereto with stirring at a room temperature (23°C), and then the reaction mixture was stirred at 40°C for 48 hours. Subsequently, methanol was added to stop the reaction, and the mixture was poured into water with vigorous stirring. The precipitated polymer was collected and was dried in vacuum to obtain 25 g (95%) of a cis-PU.

The second step was not performed and 150 L of a cis-1,4-polybutadiene manufactured by UBE INDUSTRIES, LTD. was used.

The third step was performed at a ratio of the cis-1,4-polybutadiene (PBD: 85 mol%) and the cis-olefin-containing polyurethane (cis-PU: 15 mol%) to obtain a PBD/cis-PU copolymer IV [molar ratio (urethane backbone/diene backbone): 15/85]. Mn was 27,000 and Mw/Mn was 3.2.

### Production Example 5 [synthesis of PBD/cis-PU copolymer V (PB-PU V)]

### First step [synthesis of cis-olefin-containing polyurethane (cis-PU)]

A compound of the formula 3 having A represented by the formula 6 (21.0 mL, 85.5 mmol), cis-butene-1,4-diol (6.9 mL, 85.5 mmol), and dry DMF (N,N-dimethylformamide) (150 mL) were mixed in a round bottom flask, DBTDL (dibutyltin dilaurate) (0.17 mL, 0.283 mmol) was added thereto with stirring at a room temperature (23°C), and then the reaction mixture was stirred at 40°C for 48 hours. Subsequently, methanol was added to stop the reaction, and the mixture was poured into water with vigorous stirring. The precipitated polymer was collected and was dried in vacuum to obtain 28 g (94%) of a cis-PU. Here, Ain the urethane backbone of the formula 1 is represented by the formula 6.

The second step was not performed and 150 L of cis-1,4-polybutadiene manufactured by UBE INDUSTRIES, LTD. was used.

The third step was performed at a ratio of the cis-1,4-polybutadiene (PBD: 67 mol%) and the cis-olefin-containing polyurethane (cis-PU: 33 mol%) to obtain a PBD/cis-PU copolymer V [molar ratio (urethane backbone/diene backbone): 33/67].

Mn was 16,000 and Mw/Mn was 1.8.

### Examples 1 to 6 and Comparative Examples 1 to 3

Nine rubber compositions were prepared according to the formulations shown in Table 1. As instructed in Table 1, the master batch kneading step was performed in a bunbury mixer at the highest temperature of 160°C, and then the final kneading step was performed at the highest temperature of 110°C to thus obtain the nine rubber compositions.

The rubber compositions were evaluated according to the following evaluation methods.

### Tensile test

According to JIS K 6251:2010 "vulcanized rubber and thermoplastic rubber - method of determining tensile characteristics", a No. 3 dumbbell test piece was prepared and the elongation at break (Eb), the tensile strength (TS), the toughness (TF), and the 50% elongation tensile stress (M50) were measured at a room temperature (23°C) and a tensile speed of 500 mm/min.

### Dynamic viscoelasticity test

The dynamic tensile storage modulus at a dynamic strain of 6% (6%E') and the dynamic tensile loss modulus at a dynamic strain of 6% (6%E") were measured using EPLEXOR 25 N to 500 N manufactured by NETZSCH-Gerätebau GmbH, at 23°C, an initial strain of 20%, a dynamic strain of 6%, and a frequency of 10 Hz.

### Crack growth resistance

Using a trousers-shaped test piece, the tear strength (unit: kN/m) thereof was measured using a tensile tester (Shimadzu Corporation) according to JIS K6252-1:2015.

**Table 1**

| | | | | Exam ple | | | | | | Com Ex para amp tive le | | |
|---|---|---|---|---|---|---|---|---|---|---|---|---|
| Formulation unit: parts by mass | Master batch kneading step | | | 1 | 2 | 3 | 4 | 5 | 6 | 1 | 2 | 3 |
| | | Polybutadiene *1 | | 90 | 80 | 90 | 90 | 90 | 90 | 100 | 90 | 90 |
| | | Liquid polybutadiene *2 | | 0 | 0 | 0 | 0 | 0 | 0 | 0 | 10 | 10 |
| | | PB-PU I *3 | | 10 | 20 | 0 | 0 | 0 | 0 | 0 | 0 | 0 |
| | | PB-PU II *4 | | 0 | 0 | 10 | 0 | 0 | 0 | 0 | 0 | 0 |
| | | PB-PU III *5 | | 0 | 0 | 0 | 10 | 0 | 0 | 0 | 0 | 0 |
| | | PB-PU IV *6 | | 0 | 0 | 0 | 0 | 10 | 0 | 0 | 0 | 0 |
| | | PB-PU V *7 | | 0 | 0 | 0 | 0 | 0 | 10 | 0 | 0 | 0 |
| | | Stearic acid *8 | | 2 | 2 | 2 | 2 | 2 | 2 | 2 | 2 | 2 |
| | | Antioxidant 6C *9 | | 1 | 1 | 1 | 1 | 1 | 1 | 1 | 1 | 1 |
| | Final kneading step | | | | | | | | | | | |
| | | Dicumyl peroxide *10 | | 4.8 | 4.8 | 4.8 | 4.8 | 4.8 | 4.8 | 6 | 6 | 4.8 |
| | | Bismaleimide *11 | | 1.6 | 1.6 | 1.6 | 1.6 | 1.6 | 1.6 | 2 | 2 | 1.6 |
| | | Zinc oxide *12 | | 2.5 | 2.5 | 2.5 | 2.5 | 2.5 | 2.5 | 2.5 | 2.5 | 2.5 |
| Characteristics of PB-PU | | Mn | kDa | 12 | 12 | 9 | 4 | 27 | 16 | | | |
| | | Mw | kDa | 17 | 17 | 12 | 6 | 86 | 28 | | | |
| | | Molecular weight distribution (Mw/ Mn) | | 1.4 | 1.4 | 1.3 | 1.5 | 3.2 | 1.8 | | | |
| | | Polybutadiene backbone content | mol% | 86 | 86 | 94 | 98 | 85 | 67 | | | |
| | | Polyurethane backbone content | mol% | 14 | 14 | 6 | 2 | 15 | 33 | | | |
| | | Urethane unit | mol/ 100 g | 0.30 | 0.30 | 0.18 | 0.06 | 0.32 | 0.44 | 0.00 | 0.00 | 0.00 |
| Physical properties after vulcanization | Tensile test (room temperature: 23°C) | Elongation at break (E_{b}) | % | 202 | 305 | 306 | 138 | 126 | 158 | 112 | 100 | 175 |
| | | Tensile strength (TS) | MPa | 140 | 211 | 159 | 120 | 123 | 194 | 87 | 100 | 108 |
| | | Toughness (TF) | 10⁻⁶ J/m³ | 285 | 645 | 497 | 158 | 149 | 281 | 63 | 100 | 192 |
| | | M50 | MPa | 86 | 98 | 79 | 100 | 102 | 136 | 108 | 100 | 72 |
| | Dynamic viscoelasticity test (23°C, 10Hz) | 6%E' | MPa | 137 | 146 | 121 | 105 | 125 | 127 | 165 | 100 | 81 |
| | | 6%E" | MPa | 43 | 350 | 60 | 55 | 20 | 98 | 73 | 100 | 91 |
| | Crack growth resistance | Tear strength | kN/m | 268 | 343 | 165 | 137 | 128 | 179 | 67 | 100 | 119 |

| | | | | | | | | | | | | |
|---|---|---|---|---|---|---|---|---|---|---|---|---|
| Details of the raw materials in Table 1 are shown below. *1: Polybutadiene 150 L (cis-1,4 bond: 98 wt%), manufactured by UBE INDUSTRIES CO., LTD. *2: Liquid polybutadiene Ricon 130 (1,2-vinyl bond: 28 wt%, Mn: 2500), manufactured by CRAY VALLEY *3: PB-PU I: it is PBD/cis-PU copolymer I produced in Production Example 1. *4: PB-PU II: it is PBD/cis-PU copolymer II produced in Production Example 2. *5: PB-PU III: it is PBD/cis-PU copolymer III produced in Production Example 3. *6: PB-PU IV: it is PBD/cis-PU copolymer IV produced in Production Example 4. *7: PB-PU V: it is PBD/cis-PU copolymer V produced in Production Example 5. *8: Stearic acid: trade name "Stearic Acid 50S", manufactured by New Japan Chemical Co., Ltd. *9: Antioxidant 6C: N-phenyl-N'-(1,3-dimethylbutyl)-p-phenylenediamine, trade name "Nocrac 6C", manufactured by OUCHI SHINKO CHEMICAL INDUSTRIES CO., LTD. *10: Dicumyl peroxide DCP 40% (talc: 60%), trade name "Percumyl D-40", manufactured by Nippon Oil & Fats Co., Ltd. *11: Bismaleimide: N,N'-m-phenylene bismaleimide, trade name "Sanfel BM", manufactured by SANSHIN CHEMICAL INDUSTRY CO., LTD. *12: Zinc oxide: manufactured by SAKAI CHEMICAL INDUSTRY CO., LTD. | | | | | | | | | | | | |

As is apparent from the results in Table 1, the rubber compositions in which the PB-PU I to PB-PU V were respectively mixed were very superior in the crack growth resistance as compared to the rubber compositions in which no PB-PU was mixed.

### Industrial Applicability

The rubber composition of the present invention has an excellent fracture resistance, in particular, crack growth resistance, and thus is suitably used as various members, such as, for example, a side wall, a belt coating rubber, and a ply coating rubber, of a pneumatic tire.

In addition, the rubber composition of the present invention is suitably used for applications other than for a tire, for example, as various members, such as a vibration proof rubber, a vibration isolation rubber, a crawler, a belt, and a hose.

## Claims

1. A rubber composition comprising a rubber component that contains a diene rubber, the diene rubber containing a polybutadiene rubber and a polymer (A) that has a urethane backbone and a diene backbone in one molecule, wherein the urethane backbone in the polymer (A) has a structure represented by the following formula 1: 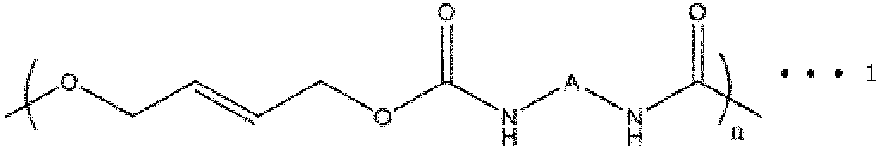
wherein, in formula 1, n represents 1 to 250 and A represents any one of the following formulae 4 to 7: 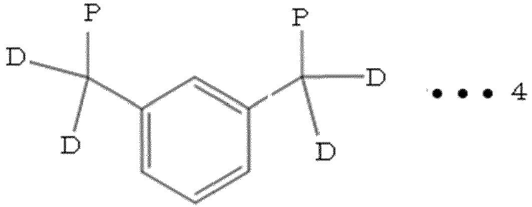 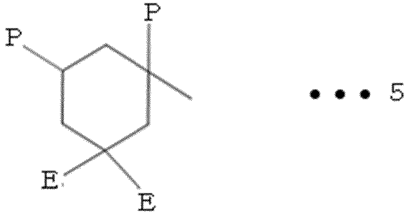 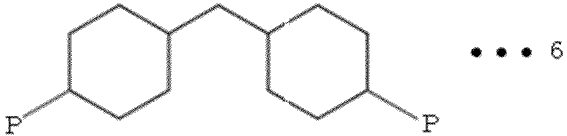 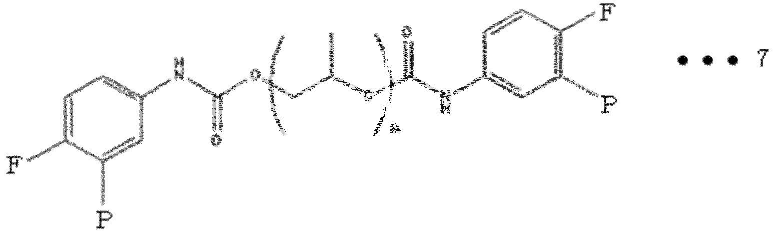
wherein P is a bonding point that binds to a nitrogen atom adjacent to A via a single bond,
wherein D, E or F is a hydrogen atom or a hydrocarbon group having 1 to 20 carbon atoms, and plural D's, E's or F's may be the same as or different from one another,
wherein, in formula 7, n is 1 to 32, and
wherein the polymer (A) is contained in an amount of 10 to 30% by mass of the rubber component.

2. The rubber composition according to claim 1, wherein the polymer (A) has a molar ratio of the urethane backbone to the diene backbone (urethane backbone/diene backbone) of 0.5/99.5 to 50/50.

3. The rubber composition according to claim 1 or 2, wherein the diene backbone in the polymer (A) contains a conjugated diene.

4. The rubber composition according to claim 3, wherein the diene backbone in the polymer (A) has a structure represented by the following formula 2: 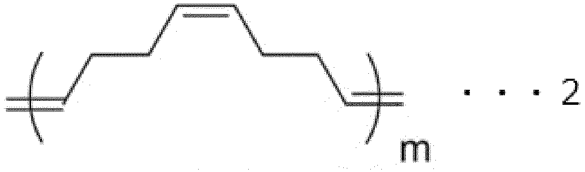 wherein m represents 1 to 27000.

5. The rubber composition according to any one of claims 1 to 4, wherein the polymer (A) has a structure represented by the following formula 3: 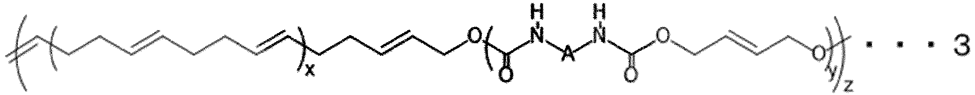 wherein A represents a hydrocarbon group which may have an element other than carbon and hydrogen, x represents 1 to 13500, y represents 1 to 250, and z represents 1 to 250.

6. The rubber composition according to any one of claims 1 to 5, wherein the polymer (A) has a non-urethane backbone between the urethane backbones, the non-urethane backbone having a number average molecular weight Mn of 2400 to 1350000, a weight average molecular weight Mw of 2400 to 2300000, and a molecular weight distribution MWD of 1 to 2.4,
wherein the number average molecular weight Mn, the weight average molecular weight Mw and the molecular weight distribution MWD are determined by gel permeation chromatography based on monodisperse polystyrenes, according to the method identified in the specification.

7. A tire formed by using the rubber composition according to any one of claims 1 to 6.

## Patentansprüche

1. Kautschukzusammensetzung, umfassend eine Kautschukkomponente, die einen Dien-Kautschuk enthält, wobei der Dien-Kautschuk einen Polybutadien-Kautschuk und ein Polymer (A) enthält, das eine Urethan-Hauptkette und eine Dien-Hauptkette in einem Molekül aufweist, wobei die Urethan-Hauptkette in dem Polymer (A) eine Struktur aufweist, die durch die folgende Formel 1 dargestellt wird: 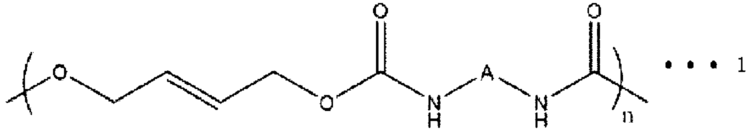
wobei in Formel 1 n für eine Zahl von 1 bis 250 steht und A für eine der folgenden Formeln 4 bis 7 steht: 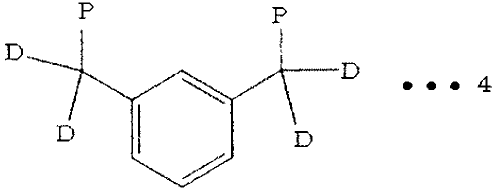 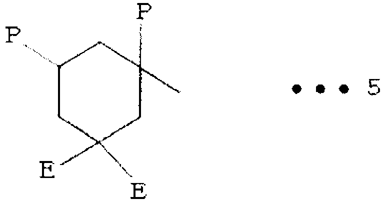 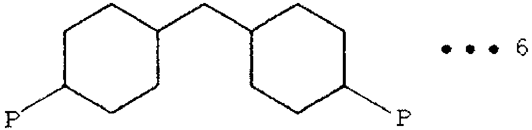 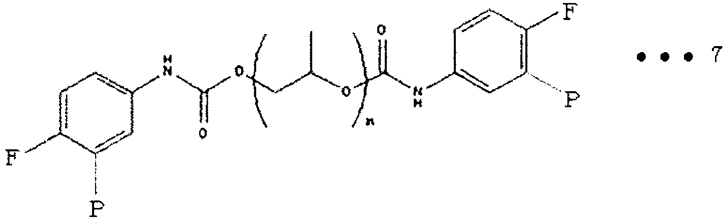
wobei P ein Bindungspunkt ist, der über eine Einfachbindung an ein Stickstoffatom gebunden ist, das A benachbart ist,
wobei D, E oder F ein Wasserstoffatom oder eine Kohlenwasserstoffgruppe mit 1 bis 20 Kohlenstoffatomen ist und mehrere D, E oder F gleich oder voneinander verschieden sein können,
wobei in Formel 7 n für eine Zahl von 1 bis 32 steht, und
wobei das Polymer (A) in einer Menge von 10 bis 30 Masseprozent der Kautschukkomponente enthalten ist.

2. Kautschukzusammensetzung nach Anspruch 1, wobei das Polymer (A) ein Molverhältnis der Urethan-Hauptkette zu der Dien-Hauptkette (Urethan-Hauptkette/Dien-Hauptkette) von 0,5/99,5 bis 50/50 aufweist.

3. Kautschukzusammensetzung nach Anspruch 1 oder 2, wobei die Dien-Hauptkette in dem Polymer (A) ein konjugiertes Dien enthält.

4. Kautschukzusammensetzung nach Anspruch 3, wobei die Dien-Hauptkette in dem Polymer (A) eine Struktur aufweist, die durch die folgende Formel 2 dargestellt wird: 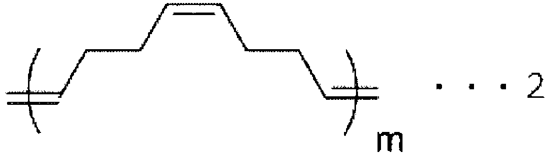 wobei m für eine Zahl von 1 bis 27000 steht.

5. Kautschukzusammensetzung nach einem der Ansprüche 1 bis 4, wobei das Polymer (A) eine Struktur aufweist, die durch die folgende Formel 3 dargestellt wird: 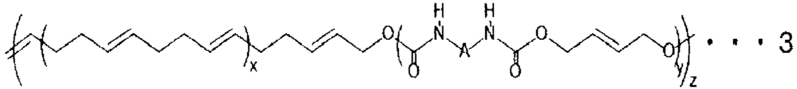 wobei A eine Kohlenwasserstoffgruppe darstellt, die ein anderes Element als Kohlenstoff und Wasserstoff enthalten kann, x für eine Zahl von 1 bis 13500 steht, y für eine Zahl von 1 bis 250 steht und z für eine Zahl von 1 bis 250 steht.

6. Kautschukzusammensetzung nach einem der Ansprüche 1 bis 5, wobei das Polymer (A) eine Nicht-Urethan-Hauptkette zwischen den Urethan-Hauptketten aufweist, wobei die Nicht-Urethan-Hauptkette ein zahlenmittleres Molekulargewicht Mn von 2400 bis 1350000, ein gewichtsmittleres Molekulargewicht Mw von 2400 bis 2300000 und eine Molekulargewichtsverteilung MWD von 1 bis 2,4 aufweist,
wobei das zahlenmittlere Molekulargewicht Mn, das gewichtsmittlere Molekulargewicht Mw und die Molekulargewichtsverteilung MWD mittels Gelpermeationschromatographie auf der Grundlage monodisperser Polystyrole gemäß dem in der Beschreibung erläuterten Verfahren bestimmt werden.

7. Reifen, der unter Verwendung der Kautschukzusammensetzung nach einem der Ansprüche 1 bis 6 gebildet wurde.

## Revendications

1. Composition de caoutchouc comprenant un composant en caoutchouc qui contient un caoutchouc diénique, le caoutchouc diénique contenant un caoutchouc polybutadiène et un polymère (A) qui présente un squelette uréthane et un squelette diénique dans une molécule, dans laquelle le squelette uréthane du polymère (A) présente une structure représentée par la Formule 1 suivante : 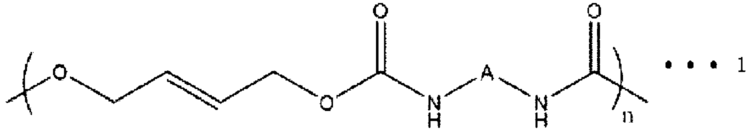
dans laquelle, dans la Formule 1, n représente un nombre compris entre 1 et 250 et A représente l'une des Formules 4 à 7 suivantes : 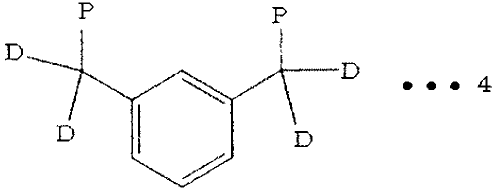 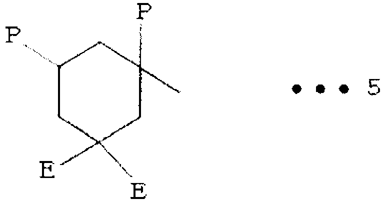 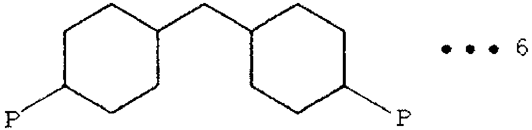 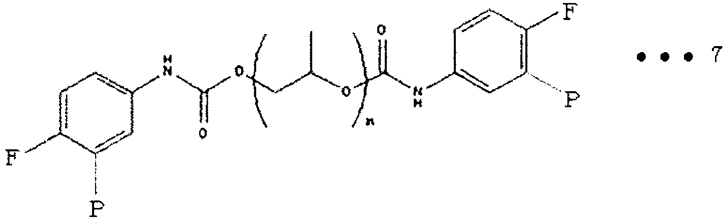
dans laquelle P est un point de liaison qui se lie à un atome d'azote adjacent à A via une liaison simple,
dans laquelle D, E ou F représente un atome d'hydrogène ou un groupe hydrocarboné présentant de 1 à 20 atomes de carbone, et les D, E ou F pluriels peuvent être identiques ou différents les uns des autres,
dans laquelle, dans la formule 7, n est compris entre 1 et 32, et
dans laquelle le polymère (A) est contenu dans une quantité de 10 à 30 % en masse du composant en caoutchouc.

2. Composition de caoutchouc selon la revendication 1, dans laquelle le polymère (A) présente un rapport molaire du squelette uréthane au squelette diénique (squelette uréthane/squelette diénique) de 0.5/99.5 à 50/50.

3. Composition de caoutchouc selon la revendication 1 ou 2, dans laquelle le squelette diénique du polymère (A) contient un diène conjugué.

4. Composition de caoutchouc selon la revendication 3, dans laquelle le squelette diénique du polymère (A) présente une structure représentée par la Formule 2 suivante : 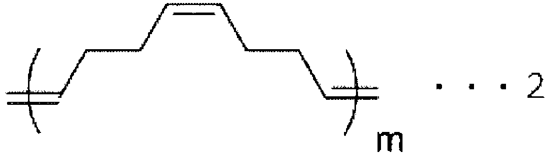 dans laquelle m représente de 1 à 27000.

5. Composition de caoutchouc selon l'une quelconque des revendications 1 à 4, dans laquelle le polymère (A) présente une structure représentée par la Formule 3 suivante : 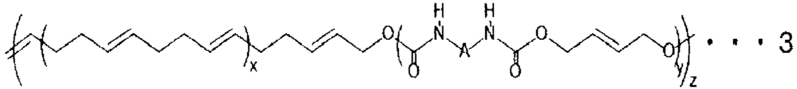 dans laquelle A représente un groupe d'hydrocarbures qui peut présenter un élément autre que le carbone et l'hydrogène, x représente 1 à 13500, y représente 1 à 250 et z représente 1 à 250.

6. Composition de caoutchouc selon l'une quelconque des revendications 1 à 5, dans laquelle le polymère (A) présente un squelette non uréthane entre les squelettes uréthane, le squelette non uréthane présentant une masse moléculaire moyenne en nombre Mn de 2400 à 1350000, une masse moléculaire moyenne en poids Mw de 2400 à 2300000 et une distribution des masses moléculaires MWD de 1 à 2,4,
dans laquelle la masse moléculaire moyenne en nombre Mn, la masse moléculaire moyenne en poids Mw et la distribution des masses moléculaires MWD sont déterminés par chromatographie par perméation de gel à base de polystyrènes monodisperses, selon le procédé identifié dans la spécification.

7. Pneu formé en utilisant la composition de caoutchouc selon l'une quelconque des revendications 1 à 6.
